# DEMANDE DE BREVET EUROPEEN

(11) **EP 0 911 379 A1**
(43) Date de publication de la demande: **28.04.1999**
(21) Numéro de dépôt: 98402586.6
(22) Date de dépôt: 19.10.1998
(51) Int. Cl.: C10G 11/18

(54) **Procédé et dispositif de vaporisation sélective des charges d'hydrocarbures en craquage catalytique**

(30) Priorité: 24.10.1997 FR 9713363
(71) Demandeur: TOTAL RAFFINAGE DISTRIBUTION S.A., 92800 Puteaux (FR)
(72) Inventeur: Fersing, Marc, 59380 Bergues (FR); Del Pozo, Mariano, 76600 Le Havre (FR)
(74) Mandataire: Jolly, Jean-Pierre

(57) **Abrégé**

L'invention concerne un procédé de craquage catalytique d'hydrocarbures en présence de catalyseur en phase fluidisée, dans un réacteur de type tubulaire (1) comprenant une zone d'injection

Selon l'invention, une partie substantielle de la charge à craquer est introduite dans la zone d'injection par au moins un moyen d'injection (3) de ladite charge à contre-courant, par rapport au sens d'écoulement du flux des grains de catalyseur, et une partie substantielle de la charge à craquer est simultanément introduite dans la même zone par au moins un moyen d'injection (2) de ladite charge à co-courant par rapport au sens d'écoulement du flux des grains de catalyseur.

## Description

La présente invention concerne un procédé et un dispositif de craquage catalytique d'hydrocarbures en présence de catalyseur en phase fluidisée. Elle a plus particulièrement pour objet un procédé et un dispositif permettant une bonne vaporisation ainsi qu'une bonne conversion des charges d'hydrocarbures traitées dans le réacteur de craquage.

De manière connue en soi, l'industrie pétrolière a recours à des procédés de conversion des charges lourdes d'hydrocarbures, procédés dans lesquels des molécules d'hydrocarbures à haut poids moléculaire et à point d'ébullition élevé sont scindées en molécules plus petites, qui peuvent bouillir dans des gammes de températures plus faibles, convenant à l'usage recherché.

Dans ce domaine, le procédé le plus largement répandu est, à l'heure actuelle, le procédé dit de craquage catalytique à l'état fluide (en anglais Fluid Catalytic Cracking, d'où le nom de procédé FCC). Dans ce type de procédé, la charge d'hydrocarbures, pulvérisée en fines gouttelettes, est mise en contact à haute température avec des grains de catalyseur de craquage circulant dans le réacteur sous forme de lit fluidisé dilué, c'est à dire en suspension au sein d'un fluide gazeux assurant leur transport. Se produit alors une vaporisation de la charge, suivie du craquage des molécules d'hydrocarbures sur les sites actifs du catalyseur. Après que l'on ait ainsi atteint la gamme de poids moléculaire désirée, avec un abaissement correspondant des points d'ébullition, les produits obtenus sont séparés des grains de catalyseur; ces derniers sont strippés afin de récupérer les hydrocarbures entraînés, puis régénérés par combustion du coke formé, et enfin remis en contact avec la charge à craquer.

Les réacteurs utilisés sont généralement des réacteurs verticaux de type tubulaire, dans lesquels le catalyseur se déplace suivant un flux essentiellement ascendant (le réacteur est alors dénommé "riser") ou suivant un flux essentiellement descendant (le réacteur est alors dénommé "dropper" ou "downer").

Il s'est avéré que l'un des facteurs clefs du processus de craquage catalytique concerne la qualité de la vaporisation de la charge d'hydrocarbures à craquer au contact des grains de catalyseur chauds régénérés, dans la zone d'injection de ladite charge. La réaction de craquage catalytique s'effectuant à l'état gazeux, la température de mélange de la charge avec les grains de catalyseur doit donc être telle qu'elle permette une vaporisation intégrale et instantanée de cette charge. En conséquence, cette température de mélange doit être supérieure ou égale à la température de vaporisation des hydrocarbures les plus lourds présents dans la charge.

Pour ce qui est de la température optimale de la réaction de craquage catalytique, celle-ci est fonction de la composition chimique de la charge, du type de catalyseur employé et de la nature des produits de conversion souhaités (essences ou gazoles). Elle est généralement comprise entre 450 et 550°C. Pour que la conversion se déroule dans de bonnes conditions, la charge doit donc être intégralement vaporisable dans cette gamme de températures. Cette contrainte a pour effet de limiter le procédé FCC à la conversion de charges relativement légères.

En effet, d'importants problèmes se posent lorsque l'on désire convertir des charges plus lourdes : ces dernières comprennent souvent des hydrocarbures dont le point d'ébullition est supérieur à la température optimale de réaction. C'est notamment le cas pour des charges telles que les résidus : celles-ci présentent la particularité d'être riches en composés à haut poids moléculaires et à forte teneur en métaux, comme notamment les asphaltènes. Elles bouillent à des températures particulièrement élevées, et sont donc difficilement vaporisables dans les conditions optimales de la réaction de craquage. Deux alternatives sont alors possibles:
- soit on ajuste la température du réacteur à la température optimale de réaction ; la température de mélange étant au dessous des températures de vaporisation des hydrocarbures les plus lourds, la charge n'est alors que partiellement vaporisée, ce qui engendre un dépôt de coke accru à la surface du catalyseur, par collision des grains de catalyseur avec des gouttelettes de charge non vaporisées. Il s'ensuit un degré de conversion moindre de la charge en produits légers, les hydrocarbures liquides n'étant pas convertis, et le catalyseur, excessivement coké, étant partiellement désactivé.
- soit on ajuste la température du réacteur à une valeur plus élevée, permettant d'assurer une vaporisation intégrale de la charge ; la température de réaction est alors trop élevée par rapport à sa valeur optimale, et il s'ensuit un accroissement du phénomène de craquage thermique, au détriment des réactions de craquage catalytique : il y a surcraquage des hydrocarbures injectés, ce qui se traduit par une production accrue de coke et d'hydrocarbures trop légers, non valorisables, parallèlement à une diminution de la production des produits intermédiaires recherchés.

Afin de remédier aux problèmes techniques liés au craquage catalytique des charges pétrolières lourdes, un certain nombre de solutions ont d'ores et déjà été envisagées :
- dans le brevet US 4 332 674 (Mauléon, Dean et Pfeiffer), est proposé un procédé dans lequel la température de mélange est augmentée, grâce à la chaleur apportée par un système de double régénération du catalyseur ; dans ce type de procédé, la charge est effectivement correctement vaporisée, mais la température de réaction est trop élevée, d'où l'apparition d'un surcraquage et de ses conséquences néfastes en terme de rendement et de sélectivité en produits recherchés.
- dans le brevet EP 0 208 609, la Demanderesse a proposé un moyen judicieux de régulation de la température dans le réacteur de craquage : immédiatement après l'injection et la vaporisation instantanée de la charge à une température de mélange élevée, la température de la réaction catalytique est abaissée à sa valeur optimale par introduction d'un fluide auxiliaire de refroidissement, à un débit et une température appropriés. Ainsi, la réaction de craquage catalytique peut se poursuivre dans des conditions plus douces et indépendantes de la température de mélange. Toutefois, la méthode de vaporisation employée présente le défaut de n'être absolument pas sélective, dans la mesure où elle ne prend pas en compte la disparité des hydrocarbures présents dans la charge à craquer. En effet, si la température de mélange est optimale pour permettre la vaporisation des composés les plus lourds de la charge, elle est néanmoins trop élevée pour les composés les plus légers également présents dans cette charge; ces derniers risquent alors d'être surcraqués, dans l'intervalle de temps qui sépare l'injection de la charge de celle du fluide auxiliaire de refroidissement.
- enfin, dans le brevet EP 0 209 442, la Demanderesse préconise d'introduire la charge sous forme d'un flux de fines gouttelettes injecté à contre-courant du flux de grains de catalyseur. Cette méthode d'injection permet une meilleure vaporisation des gouttelettes de la charge, puisque leur introduction à contre-courant ne leur permet de rencontrer qu'un flux à température constante de catalyseur chaud régénéré, se trouvant à une température proche de sa température d'introduction dans le réacteur. Cependant, là encore, les conditions de vaporisation manquent de sélectivité, puisqu'elles ne prennent pas en compte la diversité des hydrocarbures présents dans la charge. De plus, l'injection de la charge à contre-courant du flux de catalyseur entraîne des difficultés liées notamment au démarrage de l'unité de craquage catalytique : durant la période particulièrement critique où l'on démarre l'injection à contre-courant, on observe en effet un risque d'arrêt de la circulation du catalyseur ou d'inversion du sens de circulation de tout ou partie du flux des grains de catalyseur (à savoir un retour de ces derniers en direction du régénérateur), ce qui, dans tous les cas de figure, peut entraîner un grave dysfonctionnement de l'unité.

L'art antérieur ne permet donc pas de répondre de manière totalement satisfaisante au problème du craquage catalytique des charges lourdes. C'est pourquoi la Demanderesse a poursuivi ses travaux dans ce domaine, et elle a mis au point un procédé et un dispositif qui permettent de remédier aux inconvénients précités.

L'invention vise par conséquent à proposer un dispositif de craquage catalytique dans lequel la zone d'injection de la charge à craquer comporte un système d'injection mixte, constitué d'injecteurs permettant d'introduire de la charge les uns à contre-courant, les autres à co-courant, par rapport au sens d'écoulement du flux des grains de catalyseur. L'invention concerne également une utilisation particulièrement avantageuse d'un tel dispositif.

A cet effet, la présente invention a pour objet un procédé de craquage catalytique d'hydrocarbures en présence de catalyseur en phase fluidisée, dans un réacteur de type tubulaire à flux essentiellement ascendant ou descendant, comprenant une zone d'injection de charge à craquer, ce procédé étant caractérisé en ce qu'une partie substantielle de la charge à craquer est introduite dans la zone d'injection du réacteur de craquage par au moins un moyen d'injection de ladite charge à contre-courant par rapport au sens d'écoulement du flux des grains de catalyseur, et en ce qu'une partie substantielle de la charge à craquer est simultanément introduite dans la même zone par au moins un moyen d'injection de ladite charge à co-courant par rapport au sens d'écoulement du flux des grains de catalyseur.

Dans cette définition, comme dans la suite de la présente description et dans les revendications annexées, les notions de co-courant et de contre-courant sont définies par rapport au sens global d'écoulement des grains de catalyseur et des produits craqués le long du réacteur de craquage catalytique.

La Demanderesse a par ailleurs conçu un mode de fonctionnement particulièrement avantageux du procédé selon l'invention, dans lequel la charge injectée à contre-courant contient des hydrocarbures lourds tandis que la charge injectée à co-courant est de nature plus légère.

Dans un tel procédé, les hydrocarbures les plus lourds sont injectés à contre-courant du sens d'écoulement du catalyseur, ce qui leur permet de bénéficier des conditions de vaporisation améliorées apportées par ce mode d'injection. Quant aux hydrocarbures plus légers, facilement vaporisables, ils sont injectés dans des conditions moins sévères, ce qui permet de limiter le risque de surcraquage de ces hydrocarbures. Ainsi, les deux fractions de charge à craquer sont injectées de manière totalement adaptée à leurs natures respectives, dans des conditions optimales permettant d'assurer sélectivement leur vaporisation intégrale. Il en résulte une diminution de la cokéfaction due au phénomène de surcraquage, ou à la présence de gouttes de charge lourde non vaporisée.

De plus, ce procédé s'est avéré constituer une méthode originale de régulation de la température régnant dans le réacteur de craquage. En effet, alors que la température du catalyseur doit être particulièrement élevée en amont de la zone d'injection afin d'assurer la vaporisation de la charge la plus lourde injectée à contre-courant, la réaction de craquage doit par la suite se poursuivre dans des conditions plus douces afin d'éviter le surcraquage et ses conséquences néfastes. Il est effectivement possible d'abaisser cette température réactionnelle à sa valeur optimale en ajustant de manière appropriée la température de la charge injectée à co-courant, puisque cette charge, plus légère que celle injectée à contre-courant, ne requiert pas des températures de vaporisation aussi élevées. Grâce à cette régulation, on réduit ainsi les risques de surproduction de coke et d'hydrocarbures très légers observés avec un dispositif tel que décrit dans le brevet US 4 332 674, et on améliore la sélectivité de la conversion en faveur des produits intermédiaires recherchés (essences, gazoles).

De manière générale, le procédé conforme à l'invention permet d'accéder à une meilleure sélectivité pour la conversion de la charge. En effet, les hydrocarbures les plus lourds sont soumis à une vaporisation et à une première étape de craquage thermique dans des conditions sévères, tandis que les hydrocarbures les plus légers sont soumis à des conditions de vaporisation et de craquage catalytique plus douces, mieux adaptées à leur nature. On surmonte ainsi une des principales difficultés en matière de craquage catalytique, à savoir s'assurer du craquage effectif des molécules les plus lourdes, tout en évitant un surcraquage des molécules les plus légères. C'est pourquoi ce procédé s'avère particulièrement approprié aux régimes de fonctionnement dans lesquels on cherche avant tout à contrôler la sélectivité de la réaction de craquage catalytique en faveur d'une coupe intermédiaire donnée, comme c'est le cas, par exemple, en " marche maxi-gazole ".

Parallèlement, ce procédé permet d'éviter la surcokéfaction du catalyseur, ce qui se traduit par de meilleurs taux de conversion de la charge à craquer. Ceci a pour conséquence de faciliter la régénération du catalyseur, en réduisant son temps de séjour dans le (ou les) régénérateur(s) et en y diminuant les risques d'apparition de points chauds, dommageables pour le catalyseur et pour l'unité de craquage catalytique.

Enfin, le procédé conforme à l'invention permet de s'affranchir des difficultés liées au démarrage d'une unité de craquage catalytique dans laquelle de la charge est injectée à contre-courant. En effet, grâce au système d'injection mixte qu'il implique, on peut, dans un premier temps, injecter la charge à craquer à co-courant du sens d'écoulement de la phase catalytique, tout particulièrement durant la période la plus critique du démarrage (phase pendant laquelle le bilan des pressions régnant dans l'unité est sensiblement différent de celui observé lorsque cette unité fonctionne en marche productive et stable). Puis, lorsque la circulation du catalyseur est bien établie, on peut alors démarrer, progressivement ou non, l'injection à contre-courant de la charge à craquer, en diminuant si nécessaire le débit d'injection à co-courant.

La présente invention a donc également pour objet un procédé de démarrage d'une unité de craquage catalytique d'hydrocarbures en présence de catalyseur en phase fluidisée, dans un réacteur de type tubulaire à flux essentiellement ascendant ou descendant, ce procédé étant caractérisé en ce que, lors du démarrage de l'unité, on injecte de la charge d'abord à co-courant du sens d'écoulement de la phase catalytique, puis à contre-courant de celui-ci, en maintenant simultanément l'injection à co-courant, éventuellement avec une diminution progressive de son débit.

Un tel procédé permet ainsi de bénéficier des performances indéniables liées à l'injection de charge à contre-courant, tout en parvenant à une meilleure maîtrise de la circulation du catalyseur.

L'invention concerne également les dispositifs permettant la mise en oeuvre des procédés explicités ci-dessus.

A cet effet, la présente invention a pour objet un dispositif de craquage catalytique d'hydrocarbures en présence de catalyseur en phase fluidisée, dans un réacteur de type tubulaire à flux essentiellement ascendant ou descendant, équipé de moyens d'injection de la charge à craquer, ce dispositif étant caractérisé en ce que les moyens d'injection de la charge à craquer comprennent :
- au moins un moyen d'injection d'hydrocarbures à contre-courant par rapport au sens d'écoulement du flux des grains de catalyseur,
- au moins un moyen d'injection d'hydrocarbures à co-courant par rapport au sens d'écoulement du flux des grains de catalyseur,
lesdits moyens étant disposés dans une même zone d'injection et de mélange des hydrocarbures dans le flux de catalyseur.

Grâce à ce dispositif, on accède à un meilleur contrôle du processus de craquage catalytique et il devient notamment possible, pour une charge à craquer donnée, de lui faire subir un fractionnement simple avant d'injecter sélectivement la partie la plus lourde à contre-courant, et la partie la plus légère à co-courant. Ainsi, seuls les hydrocarbures les plus lourds subiront, dans un premier temps, un craquage thermique sévère, tandis que les produits les plus légers seront craqués de manière plus douce. Il devient également possible de procéder au recyclage sélectif de certains effluents de la réaction de craquage catalytique : les effluents de type résidu peuvent être réinjectés à contre-courant, tandis que des résidus plus légers de type distillat peuvent être réinjectés à co-courant. Tout ceci permet d'améliorer encore la conversion de la charge à craquer, de manière à la fois plus complète (meilleur épuisement de cette charge), et plus sélective (orientation de la conversion en faveur des produits intermédiaires recherchés).

D'autres avantages de la présente invention ressortiront de la suite de la présente description.

Dans le procédé selon l'invention, de la charge à craquer est simultanément introduite dans le réacteur de craquage à contre-courant et à co-courant par rapport au sens d'écoulement du flux des grains de catalyseur.

De manière avantageuse, deux types de charges hydrocarbonées sont simultanément converties dans le réacteur de craquage catalytique, la charge la plus lourde étant injectée à contre-courant par rapport au sens d'écoulement du flux des grains de catalyseur, tandis que la charge la plus légère est injectée à co-courant par rapport au sens d'écoulement dudit flux.

Selon un mode de fonctionnement particulièrement avantageux, la charge injectée à contre-courant peut contenir une proportion non négligeable de composés dont le point d'ébullition est supérieur ou égal à la température de mélange. Les charges préférées sont celles contenant des fractions bouillant normalement jusqu'à 700°C et plus, pouvant renfermer des teneurs élevées en asphaltènes et présenter une teneur en carbone Conradson allant jusqu'à 4% et au delà. Il peut s'agir, notamment, de distillats lourds, de résidus de distillation atmosphérique, voire de résidus de distillation sous vide. Ces charges peuvent le cas échéant avoir reçu un traitement préalable tel que, par exemple, un hydrotraitement en présence d'un catalyseur de type cobalt/molybdène. Afin de faciliter leur injection, ces charges peuvent, si nécessaire, être diluées par des coupes plus légères, qui peuvent inclure des coupes intermédiaires elles-mêmes issues du craquage catalytique et qui sont recyclées, comme par exemple des huiles de recyclage légères ("light cycle oils", LCO) ou des huiles lourdes de recyclage ("heavy cycle oils", HCO).

Parallèlement, la charge injectée à co-courant est préférentiellement de nature plus légère que celle injectée à contre-courant. Elle peut avantageusement contenir une proportion non négligeable de composés dont le point d'ébullition est inférieur ou égal à la température de mélange. Il s'agira entre autres de coupes pétrolières telles que les charges conventionnelles de craquage catalytique, comme par exemple des distillats et/ou des gazoles issus de la distillation sous vide, des distillats et/ou des gazoles de viscoréduction, voire éventuellement des résidus désasphaltés. Il peut également s'agir de coupes plus légères telles que des gazoles issus de la distillation atmosphérique, si la raffinerie est surproductrice de ce type de coupes.

On pourra également réguler les quantités des deux charges injectées de manière appropriée, notamment en adaptant le rapport des quantités d'hydrocarbures injectées à co-courant et à contre-courant à la teneur totale en composés lourds des charges que l'on souhaite craquer.

Les charges injectées à contre-courant et à co-courant peuvent être d'origine totalement différentes ou, au contraire, provenir d'une seule et même charge originelle. En effet, pour une charge à craquer donnée, celle-ci peut avantageusement, avant son injection, subir un fractionnement primaire, avec un point de coupe correspondant de préférence à la température de mélange régnant dans le réacteur de craquage. La fraction la plus lourde est alors injectée à contre-courant, tandis que la fraction la plus légère est injectée à co-courant. En conséquence, même lorsque l'on ne dispose que d'une seule charge à craquer, le dispositif objet de la présente invention apparaît extrêmement avantageux, puisqu'il permet d'optimiser le craquage de ladite charge de manière bien plus fine et avec un taux de conversion amélioré par rapport à ce que pourraient permettre les procédés décrits dans l'art antérieur.

Une variante particulièrement avantageuse du procédé selon l'invention consiste à recycler de manière appropriée tout ou partie des produits les moins valorisables récupérés à l'issue du fractionnement des effluents du craquage catalytique. Ainsi, la charge injectée à contre-courant peut-elle comprendre des résidus de recycle de type slurry, seuls ou mélangés à de la charge fraîche. De même, la charge injectée à co-courant peut comprendre des fractions de recycle de type HCO ou LCO, seules ou mélangées à de la charge fraîche.

En effet, le slurry (résidu issu du fractionnement des effluents du craquage catalytique) est un produit très lourd, riche en composés polyaromatiques, et qui comprend une proportion appréciable de fines de catalyseur (poussière provenant de l'érosion des grains), ce qui en fait un produit généralement difficile à valoriser. Il apparaît donc particulièrement opportun de le recycler en tant que charge lourde à convertir, ce qui présente également l'avantage de réintroduire les fines dans le circuit des grains de catalyseur et d'éviter ainsi leur sortie de l'unité.

Quant aux gazoles et distillats issus du craquage catalytique que sont respectivement le LCO et le HCO, ce sont également des produits peu valorisables, car riches en soufre et en composés aromatiques, et qui sont généralement utilisés comme diluants des fuels lourds. C'est pourquoi il peut être judicieux de les recycler, d'autant plus que cela permet d'accroître le taux de production d'essences de l'unité de craquage catalytique.

Le dispositif objet de la présente invention comporte avantageusement un ou plusieurs injecteurs permettant l'introduction d'hydrocarbures à contre-courant par rapport au sens d'écoulement du flux des grains de catalyseur et un ou plusieurs injecteurs permettant l'introduction d'hydrocarbures à co-courant par rapport au sens d'écoulement du flux des grains de catalyseur. Ces deux types d'injecteurs peuvent être identiques ou non, et peuvent être constitués par tout moyen connu permettant d'introduire une charge hydrocarbonée liquide dans un réacteur de craquage catalytique.

Pour chacun des deux modes d'injection (à savoir à contre-courant et à co-courant), le ou les injecteur(s) seront disposé(s) de manière à assurer une répartition uniforme de la charge correspondante sur la section du réacteur. Pour chaque mode d'injection, on disposera préférentiellement de deux à dix injecteurs disposés en couronne, c'est à dire régulièrement espacés suivant le périmètre d'une même section du réacteur tubulaire. Avantageusement, le rapport du nombre d'injecteurs à contre-courant au nombre d'injecteurs à co-courant pourra être déterminé en fonction de la teneur moyenne en résidus des charges que l'on souhaite convertir.

Le ou les injecteur(s) orienté(s) à co-courant sont tels qu'ils permettent l'introduction d'hydrocarbures suivant une direction faisant un angle compris entre 0 et 90 degrés par rapport au sens d'écoulement du flux de grains de catalyseur. Le ou les injecteur(s) orienté(s) à contre-courant sont tels qu'ils permettent l'introduction d'hydrocarbures suivant une direction faisant un angle compris entre 95 et 170 degrés par rapport au sens d'écoulement dudit flux.

Au moins pour l'injection à contre-courant, il importe d'employer de préférence des injecteurs permettant de pulvériser la charge en gouttelettes de moins de 200 microns de diamètre, voire moins de 100 microns de diamètre; cette atomisation de la charge permet d'en faciliter la vaporisation dans le réacteur, ce qui est d'autant plus fondamental que la charge injectée à contre-courant est lourde et donc difficile à vaporiser. Les dispositifs de pulvérisation alors nécessaires sont d'un type bien connu des spécialistes ; on utilisera avantageusement, par exemple, des injecteurs tels que ceux décrits dans le brevet EP 0 312 428, déposé au nom de la Demanderesse.

Selon l'invention, les deux types d'injecteurs doivent être situés dans la même zone d'injection et de mélange des hydrocarbures dans le flux de catalyseur ; en pratique, cela signifie au'ils sont placés soit au même niveau du réacteur, soit à des niveaux différents, mais suffisamment proches.

Dans le cas où les deux types d'injecteurs se trouvent au même niveau, on a une seule et même section d'injection, constituée d'injecteurs orientés à contre-courant et d'injecteurs orientés à co-courant ; de manière avantageuse, ces deux types d'injecteurs peuvent être disposés en couronne, de manière alternée, à la périphérie du réacteur.

Dans le cas où les deux types d'injecteurs sont situés à des niveaux différents, on a par contre deux sections successives d'injection, l'une constituée d'un ou plusieurs injecteurs orientés à contre-courant et l'autre constituée d'un ou plusieurs injecteurs orientés à co-courant. Lesdites sections sont espacées d'une distance maximale égale à deux fois le diamètre moyen du réacteur dans la zone d'injection de charge. Pour la réalisation d'un tel dispositif, de nombreuses alternatives sont envisageables. Notamment, les injecteurs orientés à co-courant peuvent être situés en amont de ceux orientés à contre-courant, ou en aval. Dans le cas où les deux sections sont constituées d'injecteurs disposés en couronne, ces deux couronnes d'injecteurs peuvent se situer strictement l'une au dessus de l'autre, mais de préférence elles sont décalées l'une par rapport à l'autre.

La zone d'injection des hydrocarbures se trouvera, dans le réacteur, à un niveau tel qu'elle assure un bon échange thermique entre le catalyseur et les charges introduites, ainsi qu'une vaporisation instantanée de ces dernières. En pratique, cette zone d'injection sera positionnée dans le réacteur de telle manière que le flux de grains de catalyseur pénétrant dans ladite zone soit un flux homogène de catalyseur en phase fluidisée diluée, c'est à dire ayant une densité de préférence comprise entre 15 et 700 kg/m³. La vitesse linéaire de ce flux sera avantageusement comprise entre 0,01 et 10 m/s.

Par ailleurs, cette zone d'injection pourra être incluse dans une chambre de mélange dont la configuration permet d'assurer un écoulement homogène et propice au mélange du catalyseur et des hydrocarbures injectés, que le réacteur soit de type " riser " ou " downer ". Dans le cas d'un réacteur de type " downer ", il peut s'agir, par exemple, d'une chambre de mélange telle que décrite dans la demande de brevet française n°96 11369, déposée le 18 Septembre 1996, au nom de la Demanderesse.

De manière générale, les températures des charges injectées seront comprises entre 70 et 450°C, sous une pression relative de 0,7.10⁵ à 3,5. 10⁵ Pa. La température de la charge injectée à contre-courant sera optimisée de manière à rendre possible sa pulvérisation en fines gouttelettes, d'autant plus difficile que cette charge est lourde et visqueuse. Quant à la charge injectée à co-courant, sa température sera de préférence calculée de manière à abaisser à une valeur optimale la température de réaction régnant en aval de la zone d'injection. La température finale de la zone réactionnelle ainsi refroidie pourra être, par exemple, de l'ordre de 500°C, mais devra être supérieure au point de rosée des hydrocarbures présents les plus lourds.

Le flux de grains de catalyseur sera introduit dans la section réactionnelle à une température de préférence comprise entre 600 et 950°C, selon la nature des charges à craquer.

Dans le cadre de la présente invention, il n'apparaît pas nécessaire de mentionner le type de catalyseur employé, ni les divers fluides et dispositifs de fluidisation du catalyseur, qui sont des données connues de l'homme du métier.

Les diverses formes de mise en oeuvre de l'invention mentionnées ci-dessus vont être décrites ci-après plus en détail, en référence aux dessins annexés. Ceux-ci visent seulement à illustrer l'invention et n'ont donc aucun caractère limitatif, le procédé objet de la présente invention pouvant être mis en oeuvre suivant de très nombreuses variantes.

Sur ces dessins :
La figure 1a est une vue schématique en coupe d'un réacteur de craquage, suivant la ligne I-I de la figure 2 ;
Les figures 1b, 1c et 1d illustrent schématiquement diverses configurations des injecteurs de la charge à craquer dans le réacteur ;
La figure 2 est un schéma illustrant une forme de mise en oeuvre du procédé de craquage catalytique conforme à l'invention, dans le cas d'une unité FCC équipée d'un réacteur à flux essentiellement ascendant.
La figure 3 est un schéma illustrant un fractionnement primaire d'une charge à craquer, préalablement à son craquage dans le dispositif de craquage de la figure 2 ;

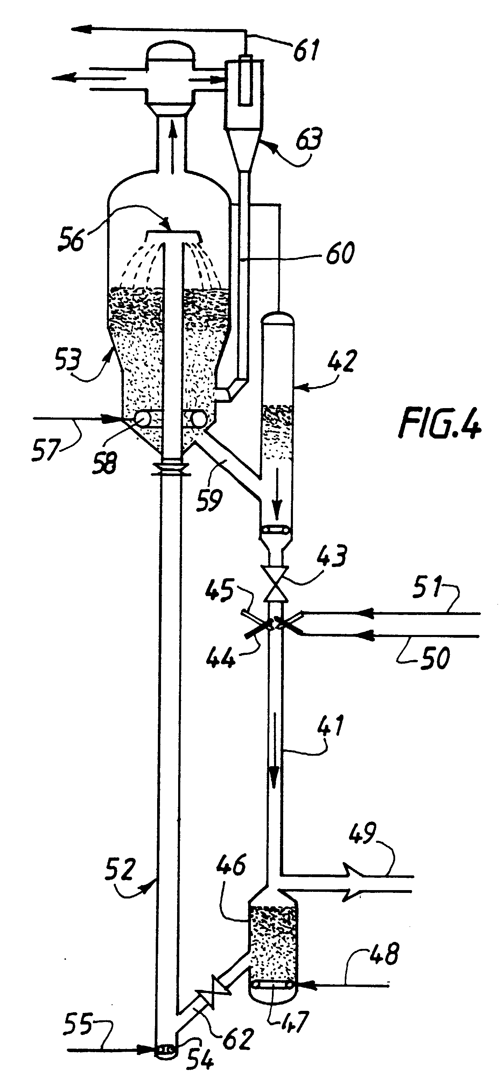

La figure 4 est une vue schématique illustrant l'application du procédé conforme à l'invention dans le cas d'une unité FCC équipée d'un réacteur à flux essentiellement descendant.

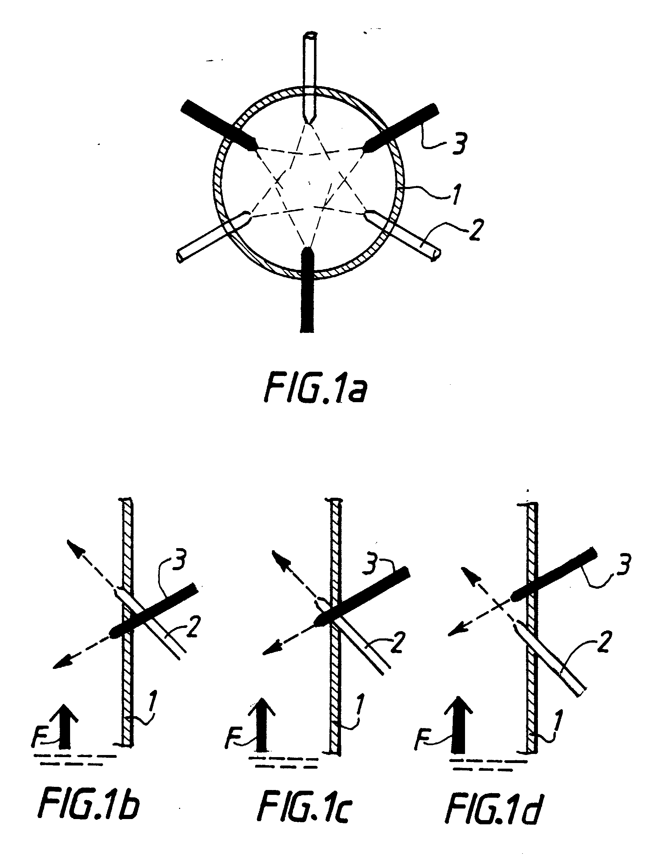

On se référera d'abord aux figures 1a à 1d, sur lesquelles les organes similaires sont désignés par les mêmes chiffres de référence. Ces figures illustrent des exemples de configuration de la zone d'injection dans des dispositifs de craquage catalytique conformes à l'invention.

Chaque dispositif comporte six injecteurs de charge, implantés sur la paroi 1 d'un réacteur de type " riser " : trois d'entre eux sont orientés à co-courant (injecteurs 2), et les trois autres sont orientés à contre-courant (injecteurs 3). Ces injecteurs sont disposés de manière alternée à la périphérie du réacteur, les injecteurs 2 à co-courant sont représentés en blanc, et ceux à contre-courant 3 en noir.

La figure 1a représente les injecteurs en vue de dessus, tandis que les figures 1b, 1c et 1d schématisent diverses possibilités de positions relatives des deux types d'injecteurs sur la paroi 1 du réacteur. Les flèches F symbolisent le sens de circulation du catalyseur. Sur la figure 1b, les injecteurs à contre-courant 3 sont positionnés légèrement en amont de ceux à co-courant 2. Sur la figure 1c, les deux types d'injecteurs sont au même niveau. Sur la figure 1d, les injecteurs à contre-courant 3 sont positionnés légèrement en aval de ceux à co-courant 2. Pour des raisons de simplicité, seuls deux injecteurs (un de chaque type) sont représentés et sont positionnés strictement l'un au dessus de l'autre, mais en pratique il semble plus opportun d'avoir plusieurs injecteurs de chaque type, positionnés en couronne et de façon décalée les uns par rapport aux autres, de manière à ce que, en vue de dessus, on obtienne le positionnement de la figure 1a.

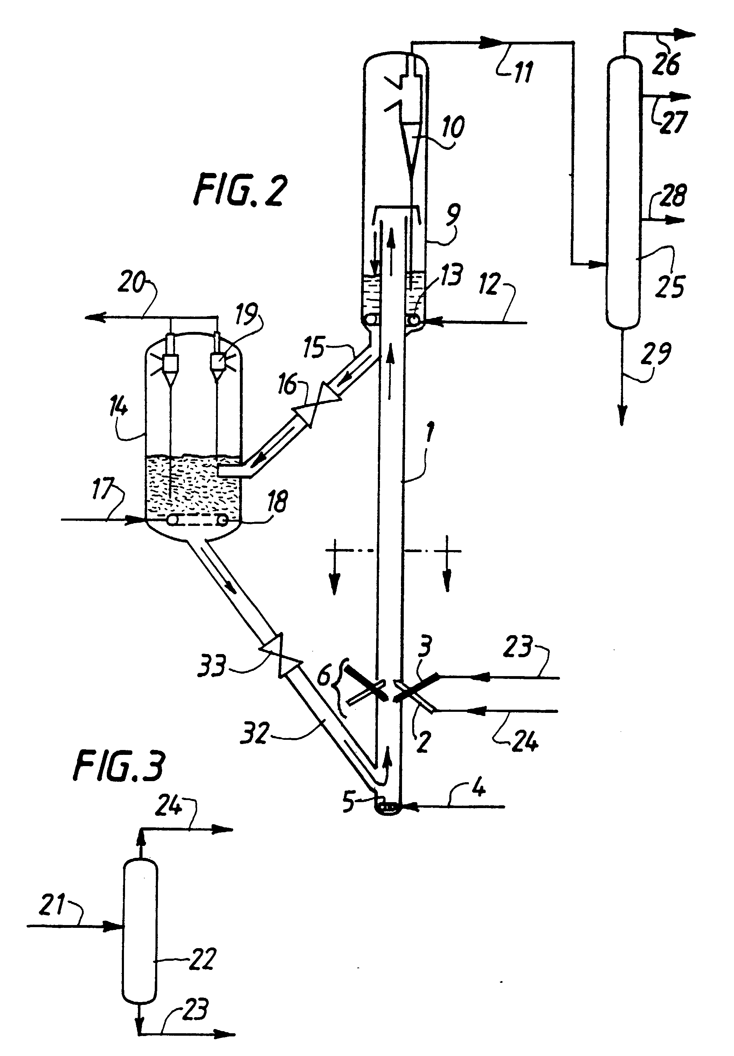

La figure 2 illustre une forme de mise en oeuvre du procédé de craquage catalytique selon l'invention, dans une unité équipée d'un réacteur à flux essentiellement ascendant. Cette unité est d'un type connu en soi. Elle comprend notamment un réacteur en forme de colonne 1, dit élévateur de charge, ou riser, alimenté à sa base par la ligne 32 en grains de catalyseur régénéré en quantité déterminée. Un gaz élévateur, par exemple de la vapeur d'eau, est introduit dans la colonne 1 par la ligne 4, au moyen d'un diffuseur 5.

La charge à craquer est introduite au niveau de la zone d'injection 6, qui comporte des injecteurs orientés à contre-courant 3 et des injecteurs orientés à co-courant 2. Lors du démarrage de l'unité, seuls les injecteurs à co-courant 2 fonctionnent. En régime permanent de fonctionnement, on peut utiliser l'un ou l'autre des deux types d'injecteurs et, de préférence, les deux simultanément. La charge injectée à contre-courant est acheminée vers les injecteurs 3 par la ligne 23, tandis que la charge plus légère injectée à co-courant est amenée aux injecteurs 3 par la ligne 24.

Avantageusement, une charge à craquer peut subir, avant son injection dans le réacteur 1, un fractionnement primaire dans une colonne de fractionnement, comme illustré par la figure 3. Cette charge est alors introduite par la ligne 21 dans la colonne 22, où elle est fractionnée en deux, avec un point de coupe correspondant de préférence à la température de mélange régnant dans le réacteur au niveau de la zone d'injection 6. La coupe la plus légère, obtenue en haut de la colonne 22, est acheminée par la ligne 24 vers les injecteurs 2, qui permettent de l'introduire à co-courant par rapport au flux de catalyseur, tandis que la coupe la plus lourde, obtenue en fond de colonne 22, est acheminée via la ligne 23 vers les injecteurs 3, qui permettent de l'introduire à contre-courant par rapport au flux de catalyseur.

La colonne 1 débouche à son sommet dans une enceinte 9, qui lui est par exemple concentrique et dans laquelle s'effectuent la séparation de la charge à craquer et le stripage des particules désactivées de catalyseur. La charge traitée est séparée dans un cyclone 10, qui est logé dans l'enceinte 9, au sommet de laquelle est prévue une ligne d'évacuation 11 de la charge craquée, tandis que les particules de catalyseur désactivées se déplacent par gravité vers la base de l'enceinte 9. Une ligne 12 alimente en fluide de stripage, généralement de la vapeur d'eau, des injecteurs ou diffuseurs 13 de gaz de fluidisation disposés régulièrement à la base de l'enceinte 9.

Les particules désactivées de catalyseur ainsi strippées sont évacuées à la base de l'enceinte 9 vers un régénérateur 14, par l'intermédiaire d'un conduit 15, sur lequel est prévue une vanne de régulation 16. Dans le régénérateur 14, le coke déposé sur les particules du catalyseur est brûlé à l'aide d'air, injecté à la base du régénérateur par une ligne 17, qui alimente des injecteurs ou diffuseurs 18 régulièrement espacés. Les particules du catalyseur traité, entraînées par le gaz de combustion, sont séparées par des cyclones 19, d'où le gaz de combustion est évacué par une ligne 20, tandis que les particules de catalyseur sont rejetées vers la base du régénérateur 14, d'où elles sont recyclées à l'alimentation de l'élévateur 1 par le conduit 32, équipé d'une vanne de régulation 33.

Les effluents de la réaction sont acheminés par la ligne 11 vers la colonne de fractionnement 25, laquelle permet de les séparer par distillation, afin d'obtenir :
- par la ligne 26, les produits gazeux aux conditions normales de température et de pression (hydrocarbures en C1 à C4) ;
- par la ligne 27, une coupe d'essences, dont l'intervalle d'ébullition peut aller de 20°C jusque vers 200-220°C.
- par la ligne 28, une coupe de type gazole ou LCO, dont l'intervalle d'ébullition s'étend généralement de 200-220°C jusque vers 320-360°C.
- et enfin, par la ligne 29, une coupe de résidu de distillation ou slurry, qui contient des quantités importantes de fines et dont l'intervalle d'ébullition s'étend généralement au delà 500°C.

En régime permanent de fonctionnement de l'unité, le slurry récupéré par la ligne 29 peut être, partiellement ou en totalité, recyclé en tant que charge injectée à contre-courant par les injecteurs 3. Il vient alors s'ajouter à la fraction lourde de la charge fraîche, amenée par la ligne 23. Il peut également être avantageux d'en extraire auparavant une coupe de type distillat, ou HCO (intervalle de distillation s'étendant de 360°C jusque vers 440°C), pour la recycler, partiellement ou en totalité, en tant que charge injectée à co-courant par les injecteurs 2. Cette fraction vient alors s'ajouter à la fraction légère de la charge fraîche, amenée par la ligne 24.

Les caractéristiques dimensionnelles et opératoires d'un tel dispositif sont habituellement les suivantes :
- hauteur de la partie réactionnelle de l'élévateur 1:5 à 40 mètres,
- débit total d'alimentation de l'élévateur 1 en charge(s) à traiter: 10³ à 20. 10³ tonnes par jour,
- débit d'alimentation de l'élévateur en catalyseur : 3 à 50 tonnes par minute,
- température(s) des charges à craquer: 70 à 450°C,
- température de craquage dans l'élévateur, en aval de la zone d'injection: 500 à 600°C,
- temps de séjour de la charge dans l'élévateur 1: 0,1 à 10 secondes,
- température de régénération du catalyseur: 600 à 950°C,
- temps de séjour du catalyseur dans le régénérateur 9: 5 à 20 minutes.

La figure 3 illustre l'application de l'invention au cas d'une unité FCC équipée d'un réacteur à flux essentiellement descendant.

Le dispositif représenté comprend un réacteur tubulaire 41 à flux descendant, ou "downer", alimenté à sa partie supérieure, à partir d'une enceinte 42, qui lui est concentrique, en particules de catalyseur régénéré, avec un débit régulé au moyen d'une vanne 43. Au-dessous de cette vanne, la charge à craquer est introduite selon un dispositif conforme à l'invention : des injecteurs 44 orientés à contre-courant, qui sont préférentiellement réservés à l'injection des hydrocarbures les plus lourds amenés par la ligne 50 et des injecteurs 45, orientés à co-courant, lesquels sont préférentiellement réservés à l'injection des hydrocarbures les plus légers amenés par la ligne 51. Les particules de catalyseur et les hydrocarbures s'écoulent alors de haut en bas dans le réacteur 41.

A la base de celui-ci, les particules de catalyseur usé se déversent dans une enceinte de stripage 46, munie à sa base d'un diffuseur 47, alimenté en vapeur d'eau par la ligne 48.

Egalement à la base du réacteur 41, au-dessus de l'enceinte 46, débouche une ligne 49, par laquelle les produits du craquage et les hydrocarbures provenant du stripage sont évacués vers une zone où ils seront fractionnés.

Les particules de catalyseur strippé sont évacuées par gravité hors de l'enceinte 46, par un conduit incliné 62, vers une colonne ascendante 52, dans laquelle ils sont acheminés vers le haut, vers un régénérateur 53, à l'aide d'un gaz vecteur diffusé en 54 à la base de la colonne 52, à partir de la ligne 55.

La colonne 52 débouche dans le régénérateur 53 au-dessous d'un séparateur balistique 56, qui assure la séparation des particules de catalyseur et du gaz vecteur. Les particules de catalyseur sont alors régénérées par combustion du coke qui s'est déposé à leur surface, à l'aide d'un courant d'air ou d'oxygène amené par la ligne 57 au diffuseur 58.

A la partie supérieure du régénérateur 53, les gaz provenant de la combustion sont évacués vers des cyclones 63. Les particules de catalyseur entraînées sont recyclées par le conduit 60 vers le régénérateur, et les gaz sont évacués par la ligne 61. Quant aux particules de catalyseur régénéré, elles sont évacuées, à la base du régénérateur 53, par gravité le long du conduit 59 en direction de l'enceinte 42.

L'exemple qui suit vise à illustrer l'invention et n'a par conséquent aucun caractère limitatif.

### EXEMPLE

Une charge pétrolière lourde, constituée d'un mélange de distillat sous vide (60% en poids) et de résidu atmosphérique (40% en poids), présente les caractéristiques suivantes:
- densité à 15°C: 0,92
- point 50% de distillation: 476°C
- viscosité à 100°C: 9,3 10⁻⁶ m²/s
- résidu de carbone Conradson: 2,10
- teneur en soufre: 1,32 % en poids
- teneur en azote basique: 720 ppm
- teneur en nickel: 2,1 ppm
- teneur en vanadium: 1,8 ppm

Trois essais de craquage catalytique ont été réalisés à partir de cette charge d'hydrocarbures, dans une unité expérimentale de craquage catalytique comportant un réacteur de type " riser " (tel que celui représenté sur la figure 2). Le catalyseur utilisé est un catalyseur commercial classique, de type zéolithique.
- Pour le premier essai, la totalité de la charge est injectée à co-courant, par rapport au sens d'écoulement du catalyseur.
- Pour le deuxième essai, la totalité de la charge est injectée à contre-courant, par rapport au sens d'écoulement du catalyseur.
- Enfin, le troisième essai est réalisé en appliquant le procédé conforme à la présente invention. Avant d'être injectée, la charge est fractionnée en deux par flash, avec un point de coupe de 420°C. La fraction la plus lourde est injectée à contre-courant du flux de catalyseur, tandis que la fraction la plus légère est injectée à co-courant. Les injecteurs à contre-courant et co-courant sont identiques et disposés au même niveau dans le riser.

Pour les trois essais, les injecteurs à contre-courant permettent l'introduction de charge suivant une direction faisant un angle de 150 degrés par rapport au sens d'écoulement du flux de grains de catalyseur, tandis que les injecteurs à co-courant permettent l'introduction de charge suivant une direction faisant un angle de 30 degrés par rapport au sens d'écoulement du flux de grains de catalyseur. Les injecteurs sont de type Venturi dans tous les cas et configurations.

Les conditions opératoires de ces essais et les résultats obtenus sont consignés dans le tableau suivant:

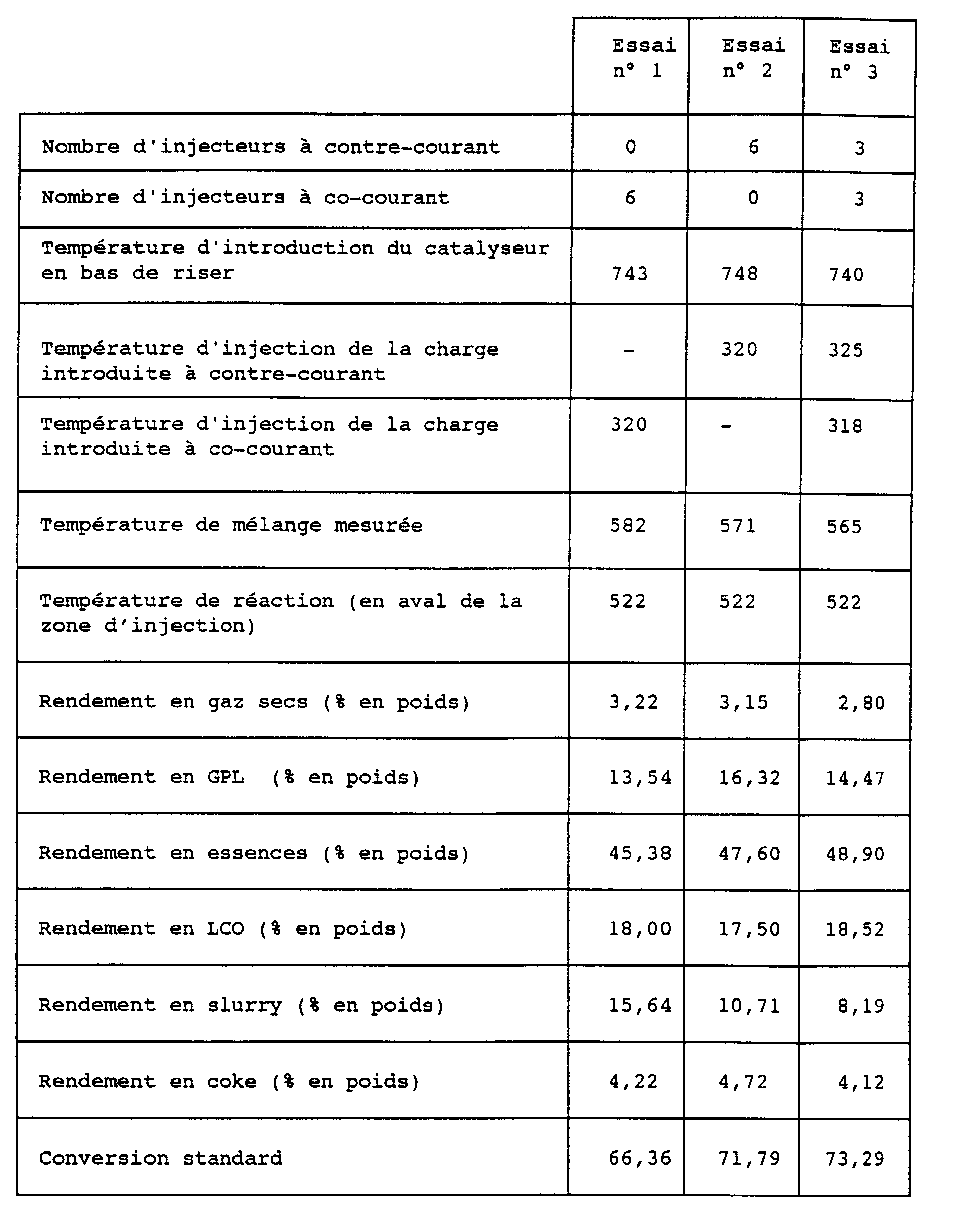

Ce tableau montre que la configuration avec injection mixte conforme à l'invention (essai 3) permet d'obtenir d'excellents résultats pour la conversion des charges lourdes, meilleurs que ceux obtenus avec des procédés conventionnels (essais 1 et 2).

En effet, dans l'essai 3, la température de mélange est bien plus proche de sa valeur idéale théorique qui est de 563°C. Ceci traduit des conditions de vaporisation plus adéquates de la charge à craquer.

De plus, les résultats exposés ci-avant montrent que l'injection mixte induit des progrès notables quant aux rendements des produits obtenus.

De manière générale, on constate une hausse du rendement de conversion standard par rapport aux essais ou l'injection est réalisée entièrement à contre-courant ou à co-courant.

Par ailleurs, on constate une baisse de la production de coke ainsi qu'une diminution nette de la production de gaz secs. Grâce aux conditions de vaporisation sélectives, on évite mieux les phénomènes de surcraquage de la charge et de surcokéfaction du catalyseur. Ces nouvelles conditions de réaction conduisent dès lors à une meilleure sélectivité de conversion. En effet, on constate une augmentation des rendements en produits intermédiaires recherchés que sont le GPL, et surtout les essences et le LCO. Parallèlement, se produit une baisse considérable du rendement en slurry, ce qui constitue un avantage indéniable, d'autant plus que ce résidu lourd est peu valorisable.

Les trois mêmes types d'essais ont également été effectués avec une charge de craquage catalytique plus traditionnelle, de type distillat sous vide, présentant les caractéristiques suivantes :
- densité : 0,911
- point 50% de distillation: 417 °C
- viscosité à 100°C: 5,87 10⁻⁶ m²/s
- résidu de carbone Conradson: 0,17
- teneur en soufre: 0,934 % en poids
- teneur en azote: 390 ppm
- teneur en nickel: 1,1 ppm
- teneur en vanadium: 1,02 ppm

Les conditions opératoires de ces essais et les résultats obtenus sont consignés dans le tableau suivant :

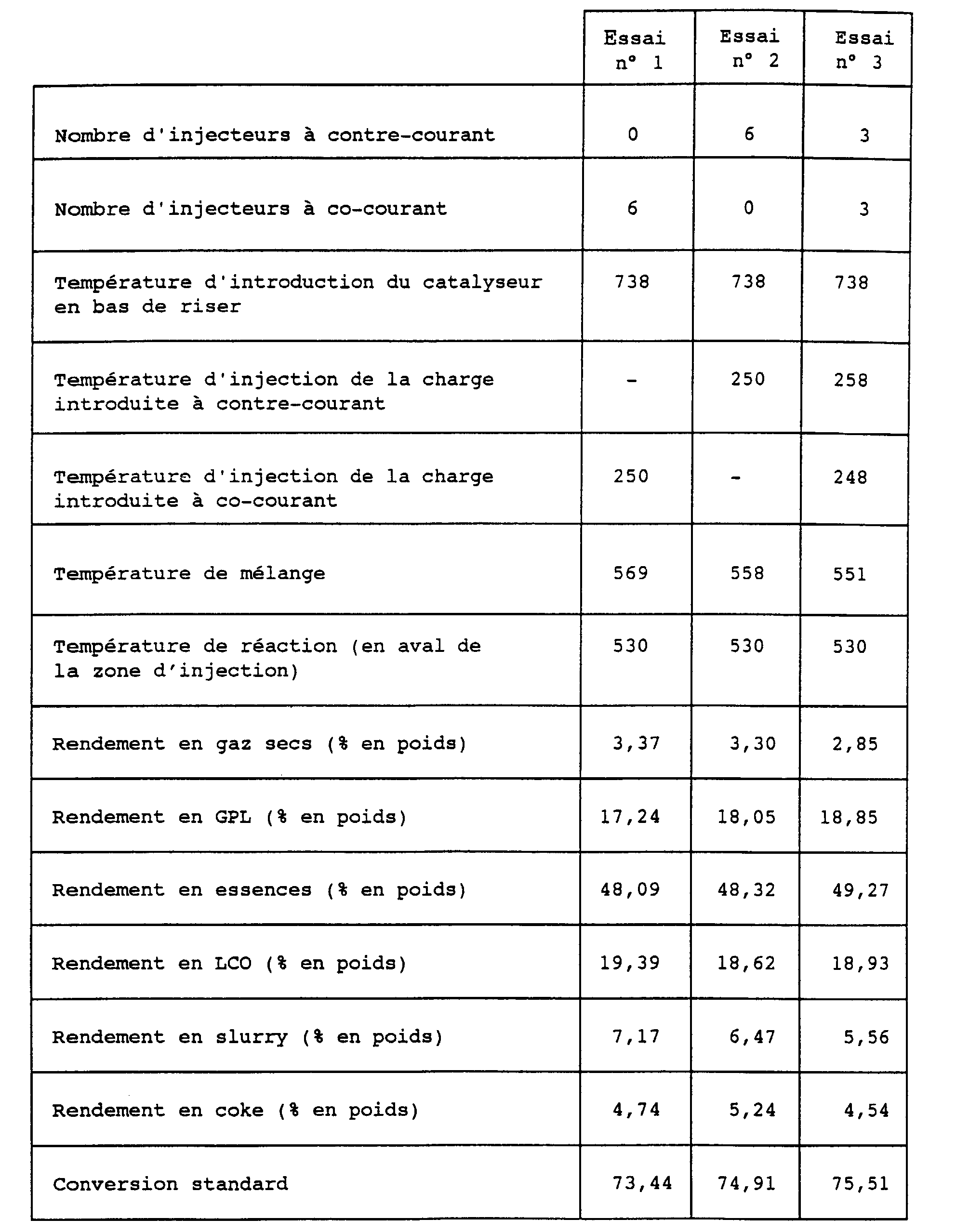

On retrouve ici dans l'essai N° 3, un peu moins marquées, les caractéristiques avantageuses observées avec la charge très lourde précédente: température de mélange plus adéquate, augmentation du rendement de conversion standard, diminution globale des "sous-produits" (gaz secs, coke et surtout slurry), meilleure sélectivité de la conversion en faveur des produits intermédiaire recherchés (GPL, essences et LCO).

Ainsi, même dans le cas d'une charge traditionnelle de craquage catalytique, le procédé conforme à l'invention est source d'indéniables améliorations.

## Revendications

1. Procédé de craquage catalytique d'hydrocarbures en présence de catalyseur en phase fluidisée, dans un réacteur de type tubulaire à flux essentiellement ascendant (1) ou descendant (41), comprenant une zone d'injection de charge à craquer, ce procédé étant caractérisé en ce qu'une partie substantielle de la charge à craquer est introduite dans la zone d'injection par au moins un moyen d'injection (3, 44) de ladite charge à contre-courant par rapport au sens d'écoulement du flux des grains de catalyseur, et en ce qu'une partie substantielle de la charge à craquer est simultanément introduite dans la même zone par au moins un moyen d'injection (2, 45) de ladite charge à co-courant par rapport au sens d'écoulement du flux des grains de catalyseur.

2. Procédé selon la revendication 1, caractérisé en ce que la charge injectée à contre-courant contient des hydrocarbures lourds et en ce que la charge injectée à co-courant est de nature plus légère.

3. Procédé selon l'une quelconque des revendications précédentes, caractérisé en ce que la charge injectée à contre-courant contient une proportion non négligeable de composés dont le point d'ébullition est supérieur ou égal à la température de mélange.

4. Procédé selon l'une quelconque des revendications précédentes, caractérisé en ce que la charge injectée à contre-courant contient des fractions bouillant normalement jusqu'à 700°C et plus, pouvant contenir des teneurs élevées en asphaltènes et présenter une teneur en carbone Conradson allant jusqu'à 4% et au delà, telles que des distillats lourds, des résidus de distillation atmosphérique et des résidus de distillation sous vide, ces charges pouvant le cas échéant avoir reçu un traitement préalable tel que, par exemple un hydrotraitement en présence d'un catalyseur de type cobalt/molybdène et pouvant être diluées ou non par des coupes plus légères.

5. Procédé selon l'une quelconque des revendications précédentes, caractérisé en ce que la charge injectée à co-courant contient une proportion non négligeable de composés dont le point d'ébullition est inférieur ou égal à la température de mélange.

6. Procédé selon l'une quelconque des revendications précédentes, caractérisé en ce que la charge injectée à co-courant comprend des coupes pétrolières telles que les charges conventionnelles de craquage catalytique, du type des distillats et/ou des gazoles issus de la distillation sous vide, des distillats et/ou des gazoles de viscoréduction, et des résidus désasphaltés ou des gazoles issus de la distillation atmosphérique.

7. Procédé selon l'une quelconque des revendications précédentes, caractérisé en ce que la charge à craquer subit un fractionnement primaire, avec un point de coupe correspondant de préférence à la température de mélange régnant dans le réacteur de craquage (1, 41), la fraction la plus lourde étant injectée à contre-courant, tandis que la fraction la plus légère est injectée à co-courant.

8. Procédé selon l'une quelconque des revendications précédentes, caractérisé en ce que la charge injectée à contre-courant comprend des résidus de recycle de type slurry, seuls ou mélangés à de la charge fraîche.

9. Procédé selon l'une quelconque des revendications précédentes, caractérisé en ce que la charge injectée à co-courant comprend des fractions de recycle de type HCO ou LCO, seules ou mélangées à de la charge fraîche.

10. Dispositif de craquage catalytique d'hydrocarbures en présence de catalyseur en phase fluidisée, dans un réacteur de type tubulaire (1, 41) à flux essentiellement ascendant ou descendant équipé de moyens d'injection de la charge à craquer, ce dispositif étant caractérisé en ce que les moyens d'injection de la charge à craquer comprennent :
- au moins un moyen (3, 44) d'injection d'hydrocarbures à contre-courant par rapport au sens d'écoulement du flux des grains de catalyseur,
- et au moins un moyen d'injection (2, 45) d'hydrocarbures à co-courant par rapport au sens d'écoulement du flux des grains de catalyseur,
lesdits moyens étant disposés dans la même zone d'injection et de mélange des hydrocarbures dans le flux de catalyseur.

11. Dispositif selon la revendication 10, caractérisé en ce que, pour chaque mode d'injection, il comprend deux à dix injecteurs (2, 45 ; 3, 44) disposés en couronne et régulièrement espacés sur le périmètre d'une même section du réacteur tubulaire (1, 41).

12. Dispositif selon l'une des revendications 10 et 11, caractérisé en ce que le ou les injecteur(s) (2, 45) orienté(s) à co-courant sont tels qu'ils permettent d'introduire la charge suivant une direction faisant un angle compris entre 0 et 90 degrés par rapport au sens d'écoulement du flux de grains de catalyseur, tandis que le ou les ou les injecteur(s) orienté(s) à contre-courant (3, 44) sont tels qu'ils permettent d'introduire la charge suivant une direction faisant un angle compris entre 95 et 170 degrés par rapport au sens d'écoulement dudit flux.

13. Dispositif selon l'une quelconque des revendications 10 à 12, caractérisé en ce que les deux types d'injecteurs (2, 45 ; 3, 44) sont placés au même niveau du réacteur (1, 41).

14. Dispositif selon la revendication 13, caractérisé en ce que les injecteurs (2, 45) orientés à co-courant et les injecteurs (3, 44) orientés à contre-courant sont disposés de manière alternée à la périphérie du réacteur (1, 41).

15. Dispositif selon l'une quelconque des revendications 10 à 12, caractérisé en ce que les deux types d'injecteurs (2, 45 ; 3, 44) sont situés à des niveaux différents du réacteur (1, 41), constituant ainsi deux section successives d'injection, lesdites sections étant espacées d'une distance maximale égale à deux fois le diamètre moyen du réacteur dans la zone d'injection de charge.

16. Dispositif selon la revendication 15, caractérisé en ce que les deux sections sont constituées d'injecteurs disposés en couronne, ces deux couronnes d'injecteurs étant de préférence décalées l'une par rapport à l'autre.

17. Dispositif selon l'une quelconque des revendications 10 à 16, caractérisé en ce que la zone d'injection des hydrocarbures est positionnée dans le réacteur (1, 41) de manière à ce que le flux de grains de catalyseur pénétrant dans ladite zone ait une densité comprise entre 15 et 700 kg/m3 et une vitesse linéaire comprise entre 0,01 et 10 m/s.

18. Dispositif selon l'une quelconque des revendications 10 à 17, caractérisé en ce que, au moins les injecteurs à contre-courant (3, 44) permettent de pulvériser la charge en gouttelettes de moins de 200 microns de diamètre, de préférence de moins de 100 microns de diamètre.

19. Procédé de démarrage d'une unité de craquage catalytique d'hydrocarbures en présence de catalyseur en phase fluidisée, dans un réacteur (1, 41) de type tubulaire à flux essentiellement ascendant ou descendant, ce procédé étant caractérisé en ce que, lors du démarrage de l'unité, on injecte de la charge d'abord à co-courant du sens d'écoulement de la phase catalytique, puis à contre-courant de celui-ci, en maintenant simultanément l'injection à co-courant, éventuellement avec une diminution progressive de son débit.

20. Utilisation du procédé selon l'une quelconque des revendications 1 à 9 et/ou du dispositif selon l'une quelconque des revendications 10 à 18 en régime de fonctionnement de type "marche maxi-gazole".
